# EUROPEAN PATENT SPECIFICATION

(11) **EP 2 262 086 B1**
(45) Date of publication and mention of the grant of the patent: **05.03.2014**
(21) Application number: 09162420.5
(22) Date of filing: 10.06.2009
(51) Int. Cl.: H02M 3/158, B60R 21/017

(54) **Single-inductor multiple-output converter**
Einzelinduktivitäts-Mehrfachausgangswandler
Convertisseur multisortie à inductance unique

(43) Date of publication of application: 15.12.2010
(73) Proprietor: Autoliv Development AB, 447 83 Vårgårda (SE)
(72) Inventor: Darraba, Roger, 78360 Montesson (FR); Fouilleul, Antoine, 95880 Enghien-Les-Bains (FR)
(74) Representative: Beattie, Alex Thomas Stewart

(56) References cited:
- WO-A-96/21263
- US-A1- 2004 201 281
- US-A1- 2005 264 271
- WING-HUNG KI ET AL: "Single-inductor multiple-output switching converters" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 1, 17 June 2001 (2001-06-17), pages 226-231, XP010559152 ISBN: 978-0-7803-7067-8
- SHARMA A ET AL: "A Single Inductor Multiple Output Converter with Adaptive Delta Current Mode Control" 2006 IEEE INTERNATIONAL SYMPOSIUM ON CIRCUITS AND SYSTEMS 21-24 MAY 2006 ISLAND OF KOS, GREECE, IEEE - PISCATAWAY, NJ, USA, 21 May 2006 (2006-05-21), pages 5643-5646, XP010940033 ISBN: 978-0-7803-9389-9

## Description

THE PRESENT INVENTION relates to a DC-DC converter, and more particularly relates to a DC-DC converter for use as a power supply for a safety device for use in a vehicle.

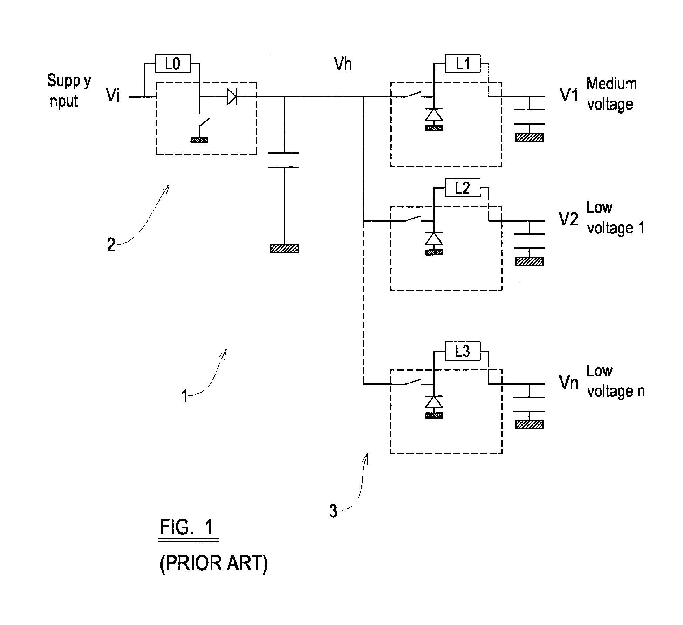

Figure 1 of the accompany drawings shows a conventional DC-DC converter circuit 1. The converter circuit 1 comprises a step up or boost converter 2 which feeds a plurality of step down or buck converters 3.

The boost converter 2 steps up an input voltage Vᵢ of 12V to a high voltage Vₕ of 25-35V. The buck converters then step down the high voltage Vₕ to lower output voltages V₁, V₂ ... Vₙ of 9V, 5V and lower.

The problem with the converter circuit 1 is that the circuit is complex, with each of the boost and buck converters requiring its own inductor coil L₀, L₁, L₂, L₃. The converter circuit is therefore bulky and expensive to manufacture.

It has been proposed previously to provide a DC-DC converter circuit in which a single inductor is shared by multiple voltage converters. An example of a conventional shared inductor DC-DC converter is described in US-A-2004/0201281. The problem with conventional shared inductor DC-DC converters of this kind is that the converters can be slow and the voltages at the outputs of the converters can fluctuate if more than one converter is activated at any one time.

The present invention seeks to provide an improved DC-DC converter.

According to one aspect of the present invention, there is provided a DC-DC converter integrated into a vehicle safety device, the DC-DC converter comprising: an input for receiving an input voltage, a first switched converter circuit configured to provide a first output voltage, and a second switched converter circuit configured to provide a second output voltage, the first and second converter circuits sharing an inductor which is energised during each cycle of operation of the DC-DC converter, wherein the first converter circuit comprises: a voltage raise switch connected in parallel after the inductor, a high voltage output switch connected between the inductor and the output of the first converter circuit, and a high voltage output capacitor connected in parallel at the output of the first converter circuit, and wherein the first and second converter circuits are configured to be switched so that, during each cycle of operation, a first portion of the energy stored in the inductor is used by the first converter circuit and a second portion of the energy stored in the inductor is used by the second converter circuit, wherein the first converter circuit further comprises: a bypass switch which is connected between the positive voltage input of the DC-DC converter and the positive voltage output of the first converter circuit to bypass the inductor so that energy stored by the first converter circuit can be used to power the second converter circuit.

Preferably the first output voltage is higher than the input voltage.

In one embodiment the second output voltage is lower than the input voltage.

In another embodiment the second output voltage is higher than the input voltage.

Advantageously the shared inductor is the only inductor provided in the DC-DC converter.

Preferably the second converter circuit comprises: an input switch connected between the input of the DC-DC converter and the inductor, a diode connected in parallel after the input switch, a low voltage output switch connected between the inductor and the output of the second converter circuit, and a low voltage output capacitor connected in parallel at the output of the second converter circuit.

In one embodiment the input switch is replaced by a diode.

Preferably the DC-DC converter further comprises: a switch controller to control the switches in the converter circuits.

In another embodiment the DC-DC converter comprises at least one further converter circuit, the or each further converter circuit comprising: a further output switch connected between the inductor and the output of the further converter circuit, and a further output capacitor connected in parallel at the output of the further converter circuit.

Preferably the DC-DC converter comprises three converter circuits which are configured to convert a 12V input respectively into outputs of 25-35V, 9V and 5V.

Conveniently the DC-DC converter is a power supply for a vehicle safety device.

In order that the invention may be more readily understood, and so that further features thereof may be appreciated, embodiments of the invention will now be described, by way of example, with reference to the accompanying drawings in which:
Figure 1 is a circuit diagram of a conventional DC-DC converter,
Figure 2 is a circuit diagram of a DC-DC converter in accordance with a preferred embodiment of the invention,
Figure 3 is a circuit diagram showing a first converter circuit that forms part of the circuit shown in figure 2, and
Figure 4 is a diagram showing a second converter circuit that forms part of the circuit shown in figure 2.

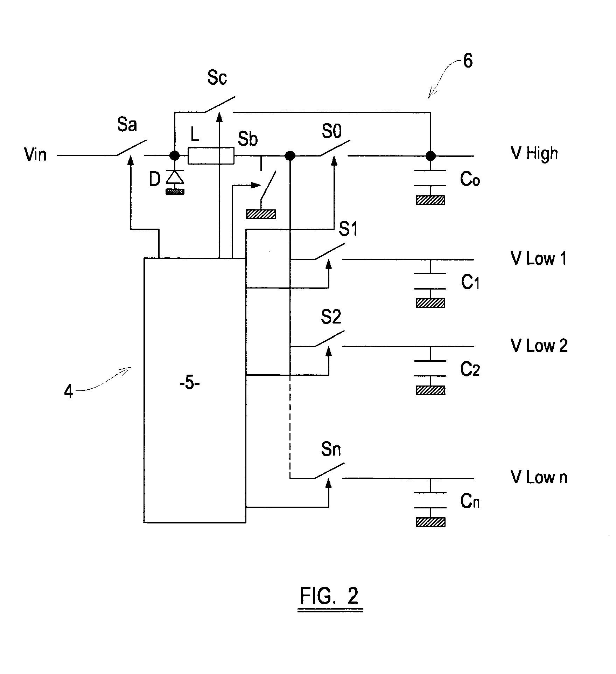

Referring to figure 2 of the accompanying drawings, a DC-DC converter 4 in accordance with a preferred embodiment of the invention comprises a voltage input Vin which is preferably configured to receive a 12V DC input voltage. The input voltage Vin might for instance be supplied by a battery in a motor vehicle.

The DC-DC converter 4 is preferably a power supply for a safety device in a motor vehicle. In embodiments of the invention, the DC-DC converter 4 is integrated into a vehicle safety device.

The converter circuit 4 incorporates switches Sa, Sb, Sc, S0, S1, S2 and Sn which are controlled by a switch controller 5. The switches Sa, Sb, Sc, S0, S1, S2 and Sn are transistor switches, such as MOSFETs. The switch controller 5 is preferably integrated with the other components in the converter circuit 4, but in other embodiments, the switch controller 5 may be positioned remotely from the rest of the components in the converter circuit 4.

An input switch Sa is connected in series with the positive supply rail at the voltage input Vᵢₙ. In other embodiments, the input switch Sa is replaced by a diode.

A diode D is connected in parallel after the input switch Sa, that is to say that the diode D is connected between the positive voltage rail and the 0V rail with the diode D facing the positive voltage rail.

An inductor coil L is connected in series after the input switch Sa and a voltage raising switch Sb is connected in parallel after the inductor L.

A high voltage output switch S0 is connected in series after the inductor L. A high voltage output tank capacitor C₀ is connected in parallel after the high voltage output switch S0. The high voltage output capacitor C₀ is preferably 1000µF or greater. A high voltage output VHigh is defined by the positive and 0V rails across the high voltage output capacitor C₀.

A bypass switch Sc is connected in parallel with the inductor L and the high voltage output switch S0. When closed, the bypass switch Sc bypasses the inductor L and the high voltage output switch S₀ electrically.

A chain of low voltage output switches S1, S2, ... Sn and low voltage output capacitors C₁, C₂, ... Cₙ are connected in parallel with the high voltage output switch S0 and high voltage output capacitor C₀ to define low voltage outputs VLow1, VLow2, ... VLow.n. The low voltage outputs VLow1, VLow2, ... VLow.n are outputs which are each configured to output a voltage which is lower than the input voltage Vin.

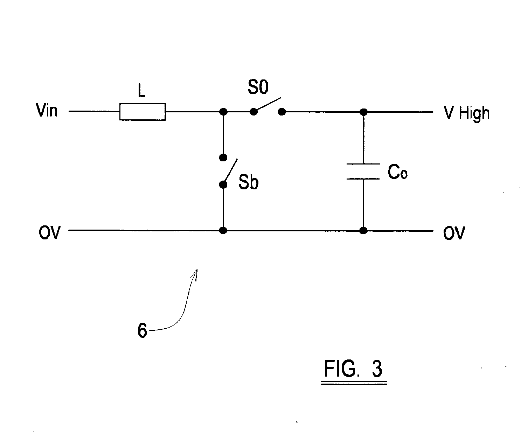

The inductor L, the voltage raise switch Sb, the high voltage output switch S0 and the high voltage output capacitor C₀ together define a switched first converter circuit 6, as shown in figure 3. The input switch Sa is assumed to be closed and is therefore not shown in figure 3.

In operation, the first converter circuit 6 functions as a step up or boost converter when the high voltage output switch S0 is closed and the voltage raise switch Sb is switched on and off to energise and dissipate energy from the inductor L. The component values of the first converter circuit 6 and the switching time of the voltage raise switch Sb are selected so that the circuit steps up an input voltage Vin of 12V to an output voltage VHigh of 25-35V. The first converter circuit 6 therefore outputs a voltage VHigh which is higher than the input voltage Vin.

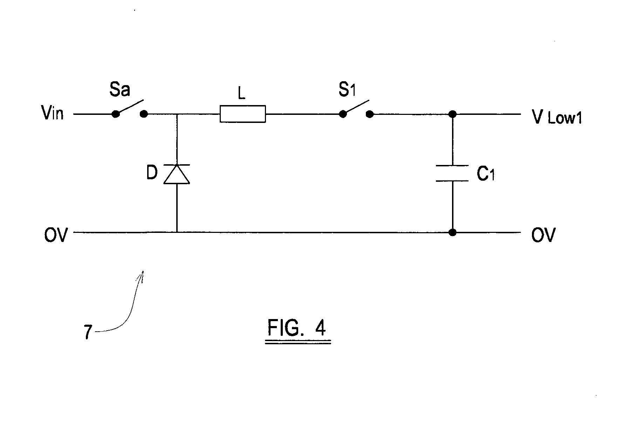

The input switch Sa, the diode D, the inductor L, the low voltage output switch S1 and the low voltage output capacitor C₁ together define a second switched converter circuit 7, as shown in figure 4.

In operation, the low voltage output switch S1 is closed and the input switch Sa is turned on and off so that the second converter circuit 7 operates as a step down or buck converter in which the low voltage output VLow1 is lower than the input voltage Vin. Preferably, the components of the second converter circuit 7 and the switching time of the input switch Sa are selected so that the low voltage output VLow1 is 9V if the input voltage Vin is 12V.

In other embodiments, the second converter circuit 7 is a step up or boost converter which outputs a voltage VLow1 which is higher than the input voltage Vin.

The DC-DC converter incorporates further converter circuits which incorporate low voltage output switch S2 and low voltage output capacitor C₂ or the other low voltage output switch(es) Sn and the other low voltage output capacitor(s) Cₙ. It is to be understood that there may be any number of cascaded further converter circuits to provide any number (n) of low voltage outputs VLow.n. The further converter circuits may be configured to provide output voltages VLow.n which are either lower or higher than the input voltage Vin.

The inductor L is shared by both the first and second converter circuits 6,7 and the further converter circuits. The inductor L is energised during each cycle of operation. The energy stored in the inductor L is split between the converter circuits by the switch controller 5 switching the switches Sa, Sb, Sc, S0, S1, S2 and Sn on and off at predetermined times. A first portion of the energy stored in the inductor L is used by the first converter 6 and a second portion of the energy stored in the inductor L is used by the second converter circuit 7 during each cycle of operation. This allows the first converter circuit 6 to output a high voltage VHigh and the second converter circuit 7 to output a lower voltage VLow1 simultaneously.

Examples of the predetermined switching times set by the switch controller will now be discussed. The examples specify a low output voltage switch Sn and a low output voltage VLow.n from one of the further converter circuits, but it is to be appreciated that these components/values equate to low voltage switches S1 or S2 or low voltage outputs VLow1 or VLow2.

The term "switching" is used to indicate that a switch is being turned on and off repeated ly.

Switching parameters set to provide the high voltage output VHigh:
a) Sa,S0 closed, Sb switching.
b) Sa,S0 closed, Sn switching if (Vin > VLow.n) and (VLow.n < value to reach)

Switching parameters set to provide the low voltage output VLow.n:
c) Sn closed, Sa switching if Vin > VLow.n.
d) Sa closed, Sn switching if (Vin > VLow.n) and (VHigh < value to reach).
e) Sa, Sb & Sn switching if Vin < VLow.n.

The switch controller 5 controls the switches Sa, Sb, SO and Sn according to steps a) to e) above so that a high voltage output VHigh is output simultaneously with a low voltage output VLow.n.

The DC-DC converter circuit 4 operates faster than conventional converter circuits because the inductor is only energised once during each cycle of operation, with the energy being split between the output circuits.

The DC-DC converter circuit 4 has an improved electro magnetic compliance (EMC) performance compared with conventional converter circuits because there is no interruption in the current supply during operation of the DC-DC converter circuit 4. The constant current operation also minimises fluctuations in the outputs of the DC-DC converter.

If, during operation, the input voltage Vin is lost, for instance if a connection between the DC-DC converter 4 and the battery of a vehicle is broken during a crash situation, the bypass switch Sc can be closed to step down the voltage across the high voltage capacitor C₀. The energy stored in the high voltage capacitor C₀ can be used to power at least one of the low voltage output circuits to provide an output VLow.n by controlling switches Sa, Sb, Sc and Sn as follows:
f) Sc,Sa closed, Sn switching if Vin < VLow.n.
g) Sc closed, Sa open Sb and Sn switching if VHigh < VLow.n.

The DC-DC converter is therefore able to provide a low voltage output VLow.n for a period of time after Vin is lost (until the energy in the high voltage capacitor C₀ has been reduced to zero).

If the input voltage Vin is higher than a required low voltage output VLow.n then the transistor forming the associated low voltage output switch Sn can be partially switched on and left in that state so that the transistor acts as a linear regulator. This allows the DC-DC converter 4 to output a low voltage VLow.n with less noise and minimal energy loss.

When used in this specification and claims, the terms "comprises" and "comprising" and variations thereof mean that the specified features, steps or integers are included. The terms are not to be interpreted to exclude the presence of other features, steps or components.

## Claims

1. A DC-DC converter (4) configured to be integrated into a vehicle safety device, the DC-DC converter comprising:
an input for receiving an input voltage (Vin),
a first switched converter circuit (6) configured to provide a first output voltage (VHigh), and
a second switched converter circuit (7) configured to provide a second output voltage (VLow1), the first and second converter circuits (6,7) sharing an inductor (L) which is energised during each cycle of operation of the DC-DC converter (4), wherein the first converter circuit (6) comprises:
a voltage raise switch (S_{b}) connected in parallel after the inductor (L),
a high voltage output switch (SO) connected between the inductor (L) and the output of the first converter circuit (6), and
a high voltage output capacitor (C₀) connected in parallel at the output of the first converter circuit (6), and wherein
the first and second converter circuits (6,7) are configured to be switched so that, during each cycle of operation, a first portion of the energy stored in the inductor (L) is used by the first converter circuit (6) and a second portion of the energy stored in the inductor (L) is used by the second converter circuit (7), **characterised in that**:
the first converter circuit (6) further comprises:
a bypass switch (S_{c}) which is connected between the positive voltage input (Vin) of the DC-DC converter (4) and the positive voltage output (VHigh) of the first converter circuit (6) to bypass the inductor (L) so that energy stored by the first converter circuit (6) can be used to power the second converter circuit (7).

2. A DC-DC converter according to claim 1, wherein the first output voltage (VHigh) is higher than the input voltage (Vin).

3. A DC-DC converter according to claim 1 or claim 2, wherein the second output voltage (VLow1) is lower than the input voltage (Vin).

4. A DC-DC converter according to claim 1 or claim 2, wherein the second output voltage (VLow1) is higher than the input voltage (Vin).

5. A DC-DC converter according to any one of the preceding claims, wherein the shared inductor (L) is the only inductor provided in the DC-DC converter (4).

6. A DC-DC converter according to any one of the preceding claims, wherein the second converter circuit (7) comprises:
an input switch (Sₐ) connected between the input (Vin) of the DC-DC converter (4) and the inductor (L),
a diode (D) connected in parallel after the input switch (Sₐ),
a low voltage output switch (Sₙ) connected between the inductor (L) and the output of the second converter circuit (7), and
a low voltage output capacitor (C₁) connected in parallel at the output of the second converter circuit (7).

7. A DC-DC converter according to claim 6, wherein the input switch (Sₐ) is replaced by a diode.

8. A DC-DC converter according to any one of the preceding claims, wherein the DC-DC converter (4) further comprises:
a switch controller (5) to control the switches in the converter circuits (6,7).

9. A DC-DC converter according to any one of the preceding claims, wherein the DC-DC converter (4) comprises at least one further converter circuit, the or each further converter circuit comprising:
a further output switch (Sn) connected between the inductor (L) and the output of the further converter circuit, and
a further output capacitor (Sn) connected in parallel at the output of the further converter circuit.

10. A DC-DC converter according to claim 9, wherein the DC-DC converter (4) comprises three converter circuits which are configured to convert a 12V input respectively into outputs of 25-35V, 9V and 5V.

11. A DC-DC converter according to any one of the preceding claims, wherein the DC-DC converter (4) is a power supply for a vehicle safety device.

## Patentansprüche

1. Gleichspannungswandler (4), der so eingerichtet ist, dass er in eine Fahrzeugsicherheitsvorrichtung zu integrieren ist, wobei der Gleichspannungswandler Folgendes umfasst:
einen Eingang zum Empfangen einer Eingangsspannung (Vin),
eine erste geschaltete Wandlerschaltung (6), die so eingerichtet ist, dass sie eine erste Ausgangsspannung (VHigh) liefert, und
eine zweite geschaltete Wandlerschaltung (7), die so eingerichtet ist, dass sie eine zweite Ausgangsspannung (VLow1) liefert, wobei die erste und zweite Wandlerschaltung (6, 7) eine gemeinsame Induktivität (L) nutzen, die während jedes Arbeitszyklus des Gleichspannungswandlers (4) mit Strom versorgt wird, wobei die erste Wandlerschaltung (6) Folgendes umfasst:
einen Spannungserhöhungsschalter (S_{b}), der nach der Induktivität (L) parallel geschaltet ist,
einen Hochspannungsausgangsschalter (S0), der zwischen der Induktivität (L) und dem Ausgang der ersten Wandlerschaltung (6) angeschlossen ist, und
einen Hochspannungsausgangskondensator (C₀), der am Ausgang der ersten Wandlerschaltung (6) parallel geschaltet ist, und wobei
die erste und zweite Wandlerschaltung (6, 7) so eingerichtet sind, dass sie geschaltet werden, sodass während jedes Arbeitszyklus ein erster Anteil der Energie, die in der Induktivität (L) gespeichert ist, von der ersten Wandlerschaltung (6) genutzt wird, und ein zweiter Anteil der Energie, die in der Induktivität (L) gespeichert ist, von der zweiten Wandlerschaltung (7) genutzt wird, **dadurch gekennzeichnet, dass**:
die erste Wandlerschaltung (6) ferner Folgendes umfasst:
einen Überbrückungsschalter (S_{c}), der zwischen dem Eingang mit positiver Spannung (Vin) des Gleichspannungswandlers (4) und dem Ausgang mit positiver Spannung (VHigh) der ersten Wandlerschaltung (6) angeschlossen ist, um die Induktivität (L) zu überbrücken, sodass von der ersten Wandlerschaltung (6) gespeicherte Energie verwendet werden kann, um die zweite Wandlerschaltung (7) mit Strom zu versorgen.

2. Gleichspannungswandler nach Anspruch 1, wobei die erste Ausgangsspannung (VHigh) höher als die Eingangsspannung (Vin) ist.

3. Gleichspannungswandler nach Anspruch 1 oder Anspruch 2, wobei die zweite Ausgangsspannung (VLow1) niedriger als die Eingangsspannung (Vin) ist.

4. Gleichspannungswandler nach Anspruch 1 oder Anspruch 2, wobei die zweite Ausgangsspannung (VLow1) höher als die Eingangsspannung (Vin) ist.

5. Gleichspannungswandler nach einem der vorhergehenden Ansprüche, wobei die gemeinsame Induktivität (L) in dem Gleichspannungswandler (4) die einzige vorgesehene Induktivität ist.

6. Gleichspannungswandler nach einem der vorhergehenden Ansprüche, wobei die zweite Wandlerschaltung (7) Folgendes umfasst:
einen Eingangsschalter (Sₐ), der zwischen dem Eingang (Vin) des Gleichspannungswandlers (4) und der Induktivität (L) angeschlossen ist,
eine Diode (D), die nach dem Eingangsschalter (Sₐ) parallel geschaltet ist,
einen Niederspannungsausgangsschalter (Sₙ), der zwischen der Induktivität (L) und dem Ausgang der zweiten Wandlerschaltung (7) angeschlossen ist, und
einen Niederspannungsausgangskondensator (C₁), der am Ausgang der zweiten Wandlerschaltung (7) parallel geschaltet ist.

7. Gleichspannungswandler nach Anspruch 6, wobei der Eingangsschalter (Sₐ) durch eine Diode ersetzt ist.

8. Gleichspannungswandler nach einem der vorhergehenden Ansprüche, wobei der Gleichspannungswandler (4) ferner Folgendes umfasst:
eine Schaltersteuerung (5) zum Steuern der Schalter in den Wandlerschaltungen (6, 7).

9. Gleichspannungswandler nach einem der vorhergehenden Ansprüche, wobei der Gleichspannungswandler (4) mindestens eine weitere Wandlerschaltung umfasst, wobei die oder jede weitere Wandlerschaltung Folgendes umfasst:
einen weiteren Ausgangsschalter (Sn), der zwischen der Induktivität (L) und dem Ausgang der weiteren Wandlerschaltung angeschlossen ist, und
einen weiteren Ausgangskondensator (Sn), der am Ausgang der weiteren Wandlerschaltung parallel geschaltet ist.

10. Gleichspannungswandler nach Anspruch 9, wobei der Gleichspannungswandler (4) drei Wandlerschaltungen umfasst, die so eingerichtet sind, dass sie einen 12V-Eingang in einen Ausgang von 25 bis 35V, 9V beziehungsweise 5V umwandeln.

11. Gleichspannungswandler nach einem der vorhergehenden Ansprüche, wobei es sich bei dem Gleichspannungswandler (4) um eine Stromversorgung für eine Fahrzeugsicherheitsvorrichtung handelt.

## Revendications

1. Convertisseur continu-continu (4) configuré pour être intégré dans un dispositif de sécurité de véhicule, le convertisseur continu-continu comprenant :
une entrée pour recevoir une tension d'entrée (Vin),
un premier circuit convertisseur commuté (6) configuré pour fournir une première tension de sortie (VHigh), et
un second circuit convertisseur commuté (7) configuré pour fournir une seconde tension de sortie (VLow1), les premier et second circuits convertisseurs (6, 7) partageant une inductance (L) qui est alimentée pendant chaque cycle de fonctionnement du convertisseur continu-continu (4), dans lequel le premier circuit convertisseur (6) comprend :
un commutateur d'élévation de tension (S_{b}) connecté en parallèle derrière l'inductance (L),
un commutateur de sortie haute tension (S0) connecté entre l'inductance (L) et la sortie du premier circuit convertisseur (6), et
un condensateur de sortie haute tension (C₀) connecté en parallèle à la sortie du premier circuit convertisseur (6), et dans lequel
les premier et second circuits convertisseurs (6, 7) sont configurés pour être commutés de sorte que, pendant chaque cycle de fonctionnement, une première partie de l'énergie stockée dans l'inductance (L) est utilisée par le premier circuit convertisseur (6) et une seconde partie de l'énergie stockée dans l'inductance (L) est utilisée par le second circuit convertisseur (7), **caractérisé en ce que** :
le premier circuit convertisseur (6) comprend en outre :
un commutateur de dérivation (S_{c}) qui est connecté entre l'entrée de tension positive (Vin) du convertisseur continu-continu (4) et la sortie de tension positive (VHigh) du premier circuit convertisseur (6) pour shunter l'inductance (L) de sorte que de l'énergie stockée par le premier circuit convertisseur (6) peut être utilisée pour alimenter le second circuit convertisseur (7).

2. Convertisseur continu-continu selon la revendication 1, dans lequel la première tension de sortie (VHigh) est supérieure à la tension d'entrée (Vin).

3. Convertisseur continu-continu selon la revendication 1 ou la revendication 2, dans lequel la seconde tension de sortie (VLow1) est inférieure à la tension d'entrée (Vin).

4. Convertisseur continu-continu selon la revendication 1 ou la revendication 2, dans lequel la seconde tension de sortie (VLow1) est supérieure à la tension d'entrée (Vin).

5. Convertisseur continu-continu selon l'une quelconque des revendications précédentes, dans lequel l'inductance (L) commune est la seule inductance se trouvant dans le convertisseur continu-continu (4).

6. Convertisseur continu-continu selon l'une quelconque des revendications précédentes, dans lequel le second circuit convertisseur (7) comprend :
un commutateur d'entrée (Sₐ) connecté entre l'entrée (Vin) du convertisseur continu-continu (4) et l'inductance (L),
une diode (D) connectée en parallèle derrière le commutateur d'entrée (Sₐ),
un commutateur de sortie basse tension (Sₙ) connecté entre l'inductance (L) et la sortie du second circuit convertisseur (7), et
un condensateur de sortie basse tension (C₁) connecté en parallèle à la sortie du second circuit convertisseur (7).

7. Convertisseur continu-continu selon la revendication 6, dans lequel le commutateur d'entrée (Sₐ) est remplacé par une diode.

8. Convertisseur continu-continu selon l'une quelconque des revendications précédentes, dans lequel le convertisseur continu-continu (4) comprend en outre :
un dispositif de commande de commutateur (5) pour commander les commutateurs dans les circuits convertisseurs (6, 7).

9. Convertisseur continu-continu selon l'une quelconque des revendications précédentes, dans lequel le convertisseur continu-continu (4) comprend au moins
un autre circuit convertisseur, le ou chaque autre circuit convertisseur comprenant :
un autre commutateur de sortie (Sn) connecté entre l'inductance (L) et la sortie de l'autre circuit convertisseur, et
un autre condensateur de sortie (Sn) connecté en parallèle à la sortie de l'autre circuit convertisseur.

10. Convertisseur continu-continu selon la revendication 9, dans lequel le convertisseur continu-continu (4) comprend trois circuits convertisseurs qui sont configurés pour convertir une entrée 12 V respectivement en sorties de 25 à 35 V, de 9 V et de 5 V.

11. Convertisseur continu-continu selon l'une quelconque des revendications précédentes, dans lequel le convertisseur continu-continu (4) est une alimentation électrique pour un dispositif de sécurité de véhicule.
